(19) Europäisches Patentamt
European Patent Office
Office européen des brevets

(11) Veröffentlichungsnummer: **0 503 352 A2**

(12) # EUROPÄISCHE PATENTANMELDUNG

(21) Anmeldenummer: **92103115.9**

(22) Anmeldetag: **25.02.92**

(51) Int. Cl.5: **C08L 77/00**, C08L 69/00, //(C08L77/00,69:00,41:00), (C08L69/00,77:00,41:00)

(30) Priorität: **08.03.91 DE 4107397**

(43) Veröffentlichungstag der Anmeldung:
**16.09.92 Patentblatt 92/38**

(84) Benannte Vertragsstaaten:
**DE FR GB IT**

(71) Anmelder: **BAYER AG**

**W-5090 Leverkusen 1 Bayerwerk(DE)**

(72) Erfinder: **Heger, Georg, Dr.**
**Uerdinger Strasse 260**
**W-4150 Krefeld(DE)**
Erfinder: **Lütjens, Holger, Dr.**
**Rybniker Strasse 12**
**W-5000 Köln 80(DE)**
Erfinder: **Fengler, Gerd, Dr.**
**Deutschordensweg 12**
**W-4150 Krefeld(DE)**
Erfinder: **Piejko, Karl-Erwin, Dr.**
**Unterscheider Weg 7a**
**W-5060 Bergisch Gladbach 2(DE)**
Erfinder: **Buekers, Josef**
**Kneinstrasse 58a**
**W-4150 Krefeld(DE)**

(54) **Polymerisate mit Sulfonamid-Einheiten als Verträglichkeitsvermittler für Polyamid/Polycarbonat-Blends.**

(57) Gegenstand der Erfindung sind verträgliche Mischungen mit guten Oberflächen aus aromatischen Polycarbonaten bzw. Poly(ester)carbonaten und Polyamiden, sowie gegebenenfalls Pfropfpolymerisaten und üblicher Zusatzmittel unter Zusatz von Sulfonamideinheiten enthaltenden Polymerisaten als Verträglichkeitsvermittler, Verfahren zu ihrer Herstellung und die Verwendung dieser Mischung zur Herstellung von Formkörpern guter Oberflächeneigenschaften.

EP 0 503 352 A2

Gegenstand der Erfindung sind verträgliche Mischungen mit guten Oberflächen aus aromatischen Polycarbonaten bzw. Poly(ester)carbonaten und Polyamiden, sowie gegebenenfalls Pfropfpolymerisaten und üblicher Zusatzmittel unter Zusatz von Sulfonamideinheiten enthaltenden Polymerisaten als Verträglichkeitsvermittler, Verfahren zu ihrer Herstellung und die Verwendung dieser Mischung zur Herstellung von Formkörpern guter Oberflächeneigenschaften.

Binäre Formmassen aus Polycarbonaten und Polyamiden sind ohne Zusätze nicht thermoplastisch verarbeitbar. Auf dem Extruder schäumt die Schmelze auf, da das Polycarbonat vom Polyamid abgebaut wird. Es werden daher Polyamide mit niedrigen Endgruppengehalten, z.B. 20 Milliäquivalent/kg bevorzugt (siehe US 47 32 934 und EP 285 693).

J 85/31 224 beschreibt Mischungen aus Polyamid, Polycarbonat, Polyacrylat ohne Reaktivgruppen und Polyphenylen-(ester-)ethern, die auf dem Extruder verarbeitbar sind. In US 48 83 836 werden Polyamid/Polycarbonat-Blends beansprucht, die als Verträglichkeitsvermittler Polyalkyloxazolin enthalten. Die erhaltenen Formmassen beider Anmeldungen weisen jedoch Oberflächenstörungen auf, die auf die Unverträglichkeit der Polykondensate zurückzuführen sind.

Aus EP 227 053 geht hervor, daß sich aus Polyamid, aromatischem Polycarbonat mit Hilfe von Polykondensaten auf der Basis von Bisphenolen mit Glycidyl-Endgruppen verträgliche Mischungen herstellen lassen. In der J 63/314 270 werden Polyamid/Polycarbonat-Mischungen beschrieben, die Copolymerisate auf der Basis Polyolefin/Glycidylmethacrylat enthalten.

Die Unverträglichkeit beider Systeme zeigt sich in der geringen Zähigkeit der Mischungen, die eine breite technische Anwendung ausschließt.

J 59/213 751 beansprucht Formmassen aus Polyamid, Polycarbonat und Pfropfkautschuk auf Polyolefin- bzw. Polyacrylatbasis. Die WO 88/02387 lehrt, daß durch die Verwendung spezieller Verträglichkeitsvermittler wie Polyesteramide, ABS, MBS, EPM-Kautschuk oder Polymethylmethacrylat technisch hochwertige Polyamid/Polycarbonat-Blends erhalten werden. Die Zugabe weicher Polymere verringert jedoch die praktische Wärmeformbeständigkeit oder führt nur zu unzureichenden Zähigkeitsverbesserungen.

Die Aufgabe der vorliegenden Erfindung war es somit, thermoplastisch gut verarbeitbare Formmassen aus Polyamid und Polycarbonat herzustellen, die keine Delaminierungen und somit störungsfreie Oberflächen aufweisen. Darüber hinaus sollten die Blends gute Zähigkeiten bei einer erhöhten Wärmeformbeständigkeit besitzen.

Dies wird durch die erfindungsgemäßen Formmassen gelöst, die aus Polyamid, Polycarbonat bzw. Poly-(ester-)carbonat, Sulfonamideinheiten enthaltenden Polymerisaten und gegebenenfalls Elastomeren bestehen.

Gegenstand der vorliegenden Erfindung sind somit Mischungen, die

A) 5 bis 70 Gew.-%, vorzugsweise 10 bis 60 Gew.-%, insbesondere 15 bis 50 Gew.-% Polyamid,

b) 94 bis 10 Gew.-%, vorzugsweise 87 bis 25 Gew.-%, insbesondere 80 bis 40 Gew.-% thermoplastisches, aromatisches Polyestercarbonat oder Polycarbonat,

C) 1 bis 20 Gew.-%, vorzugsweise 3 bis 15 Gew.-%, insbesondere 5 bis 10 Gew.-% Homo- oder Copolymerisat aus einem radikalisch polymerisierbaren Sulfonamidmonomeren und gegebenenfalls einem weiteren sulfonamidfreien Vinylmonomeren und gegebenenfalls

D) Elastomere, sowie übliche Zusatzstoffe,

so daß sich A), B), C) und D) zu 100 Gew.-% ergänzen, enthalten.

Ein weiterer Gegenstand der Erfindung ist die Verwendung der Polymermischungen aus den Komponenten A) bis D) zur Herstellung von thermoplastischen Formmassen, bzw. ein Verfahren zu ihrer Herstellung.

Als Polyamidkomponente A) der erfindungsgemäßen Formmassen-Mischung eignen sich teilkristalline oder amorphe Polyamide, insbesondere mit reduzierten Mengen an Aminoendgruppen.

Als teilkristalline Polyamide sind beispielsweise einsetzbar: Polyamid-6, Polyamid-6,6, Polyamid-4,6 und teilkristalline Copolyamide auf Basis dieser Komponenten. Weiterhin kommen beispielsweise teilkristalline Polyamide in Betracht, deren Säurekomponente insbesondere ganz oder teilweise (neben Adipinsäure bzw. $\epsilon$-Caprolactam) aus Terephthalsäure und/oder Isophthalsäure und/oder Korksäure und/oder Sebacin- und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Tetramethylendiamin und/oder Hexamethylendiamin und/oder 2,2,4- und/oder 2,4,4-Trimethylhexamethylendiamin und/oder Isophorondiamin besteht, und deren Zusammensetzungen aus dem Stand der Technik prinzipiell bekannt sind.

Außerdem sind teilkristalline Polyamide beispielhaft zu nennen, die ganz oder teilweise aus Lactamen mit 6 bis 12 C-Atomen, gegebenenfalls unter Mitverwendung einer oder mehrerer der obengenannten

Ausgangskomponenten, hergestellt werden.

Besonders bevorzugte teilkristalline Polyamide A) sind Polyamid-6 und Polyamid-6,6 oder ihre Mischungen oder Copolyamide mit nur geringen Anteilen (bis etwa 15 Gew.-%) der Co-Komponenten.

Es können als Polyamidkomponenten A) auch amorphe Polyamide eingesetzt werden. Sie werden erhalten durch Polykondensation von Diaminen, beispielsweise Ethylendiamin, Tetramethylendiamin, Hexamethylendiamin, Decamethylendiamin, 2,2,4- und/oder 2,4,4-Trimethylhexamethylendiamin, m- und/oder p-Xylylendiamin, Bis-(4-amino-cyclohexyl)-methan oder Gemischen aus 4,4'- oder 2,2'-Diamino-dicyclohexylmethanen, 2,2-Bis-(4-amino-cyclohexyl)-propan, 3,3'-Dimethyl-4,4'-diamino-dicyclohexylmethan, 3-Aminoethyl-3,5,5-tri-methyl-cyclohexylamin, 2,5- und/oder 2,6-Bis-(amino-methyl)-norbornan und/oder 1,4-Diaminomethylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere enrhalten werden, geeignet, ferner solche Copolymere, die unter Zusatz von Aminocarbonsäuren wie ω-Aminocapronsäure, ω-Aminoundecansäure oder ω-Aminolaurinsäure oder ihren Lactamen, hergestellt werden.

Anstelle des reinen 4,4'-Diamino-dicyclohexylmethans können auch Gemische der stellungsisomeren Diamino-dicyclohexylmethane eingesetzt werden, die sich zusammensetzen aus:
70 bis 99 Mol-% des 4,4'-Diaminoisomeren
1 bis 30 Mol-% des 2,4'-Diaminoisomeren
0 bis 2 Mol-% des 2,2'-Diaminoisomeren
und gegebenenfalls entsprechend höherkondensierten Diaminen, die durch Hydrierung von Diaminophenylmethan technischer Qualität erhalten werden.

Aus den genannten Komponenten wie Diaminen bzw. Dicarbonsäuren ist für amorphe Polyamide mindestens eine der Komponenten unsymmetrisch oder seitenkettenhaltig.

Besonders geeignete amorphe Polyamide sind die Polyamide, hergestellt aus Isophthalsäure, Tetramethylendiamin und/oder Hexamethylendiamin und weiteren Diaminen wie 4,4'-Diamino-dicyclohexylmethan, Isophorondiamin, 2,2,4-und/oder 2,4,4-Trimethyl-hexamethylendiamin, 2,5- und/oder 2,6-Bis-(aminomethyl)-norbornan; oder aus Isophthalsäure, 4,4'-Diamino-dicyclohexylmethan und ε-Caprolactam;oder aus Isophthalsäure, 3,3'-Dimethyl-4,4'-diamino-dicyclo-hexylmethan und Laurinlactam; oder aus Terephthalsäure und dem Isomerengemisch aus 2,2,4- und/oder 2,4,4-Trimethylhexamethylendiamin.

Es können auch Gemische aus teilkristallinen und amorphen Polyamiden, insbesondere solche mit 20 bis 97 Gew.-% teilkristallinen und Polyamiden und 3 bis 20 Gew.-% amorphen Polyamiden eingesetzt werden.

Erfindungsgemäß bevorzugt werden Polyamide A) mit einer so geringen Amino-Endgruppen-Konzentration, daß kein nennenswerter Abbau des Polycarbonats bzw. Polyestercarbonats, d.h. Verringerung der Viskosität und des mittleren Molekulargewichts $M_w$ um mehr als 20 % eintritt - erkennbar an der gleichbleibenden Zähigkeit der Blends -. Derartige Polyamide können durch Endcapping der reaktiven Amino-Endgruppen an den Polymeren (mittels Kettenabbrechern üblicher Art, z.B. mit Monocarbonsäuren wie Propionsäure) auf der Stufe des Polyamids oder bereits während der Polymerisation des Polyamids, unter geeigneten, dem Fachmann bekannten Bedingungen erhalten werden. Geringe Aminoendgruppengehalte liegen insbesondere bei ≦30 Milliäquivalent/kg, ganz besonders bei ≦20 Milliäquivalent/kg.

Die Anzahl der Aminoendgruppen kann auch auf der Stufe des Polyamids durch eine Reihe von Endcapping-Reaktionen entsprechend dem Stand der Technik (siehe EP 143 037, 188 328; DE 19 12 549, 19 58 306; US 3 383 391, 3 890 286) verringert werden. Derartige Reaktionen sind beispielsweise die Umsetzung mit Carbonsäureanhydriden, Säurechloriden ($R^1COCl$), Carbonsäuren, -estern, -amiden $R^1CONR^1R^1$ oder Oxazolinonen, oder aber die Umsetzung mit Carbonaten ($R^1CO(CO)OR^1$) mit Isocyanaten oder mit Carbodiimiden zu Guanidinen. Als weitere Reaktionen sind zu erwähnen: die Umsetzung der Aminoendgruppen mit Aldehyden oder Acetalen zu Iminen, aber auch die Reaktion mit Epoxiden und Oxazolinen oder die Addition an olefinische Doppelbindungen $R^2CH=CHR^2$ ($R^1$ = gesättigter oder ungesättigter aliphatischer oder aromatischer Kohlenwasserstoff; $R^2$ = $R^1$, $-(C=O)R^3$, $-(C=O)OR^1$, $-(C=O)OH$, $-CHO$, $-(C=O)NR^1R^1$; $R^3$ = geradkettige oder verzweigte $C_2$-$C_{15}$-Alkylreste, $C_3$-$C_{18}$-Cycloalkyl, $C_6$-$C_{20}$-Arylrest). Desweiteren sind zur Verkappungsreaktion Copolymere zu nennen, die die genannten Reaktivgruppen enthalten, wie beispielsweise Styrol-Maleinsäure-Copolymerisate (Dylark®, Cadon®), Copolymere auf der Basis von α-Olefinen bzw. Alkyl-vinyl-ether und Maleinsäureanhydrid (Gantrez®), Maleinsäureanhydrid-modifizierte Olefine (z.B. US 3 560 457, Hercoprime®, Plexar®)und EP(D)M-Kautschuke, (Exxelor®, z.B. Exxelor VA-1803 (Exxon) Polybutadien-Styrol-Maleinsäureanhydrid-Terpolymere (Ricon®) oder Polykondensate aus 2,2-Di-(4-hydroxyphenyl)-propan sowie Epichlorhydrin u.ä..

Die Polyamide A) können auch aus Mischungen von einem Copolyamid, bestehend aus wiederkehrenden Einheiten, die sich von der Adipinsäure und Hexamethylendiamin ableiten und Einheiten, die sich von ε-Caprolactam ableiten, und Polyhexamethylenadipinsäureamid, wie in der DE-OS 37 35 404 beschrieben, oder von teilkristallinen und amorphen Polyamiden bestehen, wobei vorzugsweise der amorphe Polyamidanteil unter dem teilkristallinen Polyamidanteil liegt, insbesondere 3 bis 20 Gew.-% beträgt.

Bevorzugt sind teilkristalline Polyamide auf Basis Polyamid-6, Polyamid-6,6 und teilkristalline Polyamide auf Basis dieser Hauptkomponenten unter Zusatz von Co-Komponenten der erwähnten Art.

Die als Legierungsbestandteil B) einsetzbaren thermoplastischen, aromatischen Polycarbonate oder Copolycarbonate bzw. (Co)Poly-(ester)-(carbonate) aus bekannten Komponenten (z.B. Diphenolen und aktiven Kohlensäurederivaten) werden nach üblichen Verfahren aufgebaut.

Beispiele für HO-Ar-OH sind:
Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, Pentamethyl-(hydroxyphenyl)-indanol, α,α'-Bis-(hydroxyphenyl)-diisopropylbenzole sowie deren kernalkylierte und kernhalogenierte Verbindungen.

Diese und weitere geeignete aromatische Dihydroxyverbindungen sind z.B. in den US-Patentschriften 3 028 365, 2 999 835, 3 148 172, 3 271 268, 2 991 273, 3 271 367, 3 780 078, 3 014 891, 2 999 846 den deutschen Offenlegungsschriften 15 70 703, 20 36 052, 20 63 050, 22 11 957, 24 02 175, 24 02 176, 24 02 177, der französischen Patentschrift 1 561 518, in der Monographie "H. Schnell, Chemistry and Physics of Polycarbonates, Polymer Reviews 9, Interscience Publishers, New York 1964" und in V. Serini, D. Freitag und H. Vernaleken, "Polycarbonate aus o,o,o',o'-tetramethyl-bis-phenolensubstituierten Bisphenolen", Angewandte Makromolekulare Chemie 55 (1976) 175 bis 189 beschrieben.

Bevorzugte Diphenole sind:
Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3',5'-dichlor-4'-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, Bis-(3,5-dimethyl-4-hydroxyphenyl)-butan, Bis-(3,5-dimethyl-4-hydroxyphenyl), 1,1,3,4,6-Pentamethyl-3-(3,5-dimethyl-4-hydroxyphenyl)-indan-5-ol, 1,1-Bis-(4-hydroxyphenyl)-3,3-dimethylcyclohexan, 1,1-Bis-(4-hydroxyphenyl)-3-methyl-cyclohexan, 1,1-Bis-(4-hydroxyphenyl)-3-methyl-cyclohexan.

Besonders bevorzugte Diphenole sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.
Insbesondere sind 2,2-Bis-(4-hydroxyphenyl)-propan und 1,1-Bis-(4-hydroxyphenyl)-3,3,5-trimethylcyclohexan bevorzugt.

Es können ein oder mehrere Diphenole eingesetzt werden. Diphenole können in an sich bekannter Weise durch Kondensation von Phenolen und Ketonen hergestellt werden.

Die eingesetzten (Co)Polycarbonate B) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole in wäßrig alkalischer Phase gelöst. Zur Herstellung von Co-Polycarbonaten werden Gemische von Diphenolen eingesetzt. Zur Regulierung des Molekulargewichtes können Kettenabbrecher zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 °C und 40 °C.

Als Verzweiger dienen, falls benutzt, in bekannter Weise geringe Mengen, vorzugsweise Mengen zwischen 0,05 und 2,0 Mol-% (bezogen auf eingesetzte Diphenole), an drei oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,

Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktureinheiten; ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril oder Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate B) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden. Die Isolierung der Polycarbonate erfolgt in bekannter Weise.

Die hochmolekularen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die verwendeten Polycarbonate B) haben bevorzugt Molekulargewichte Mw (Gewichtsmittel, ermittelt durch Gelchromatographie nach vorheriger Eichung) von mindestens 12 000, besonders bevorzugt von 12 000 bis 220 000 und insbesondere von 20 000 bis 100 000. Sie können linear oder verzweigt sein, sie sind Homopolycarbonate oder Copolycarbonate auf Basis der genannten Diphenole.

Geeignete, gegebenenfalls zur Herstellung von (Co)Polyestercarbonaten B) einzusetzende, aromatische Dicarbonsäuren sind beispielsweise Oxalsäure, Malonsäure, Bernsteinsäure, Glutarsäure, Adipinsäure, Pimelinsäure, Suberinsäure, Azelainsäure, Sebazinsäure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophthalsäure, Tetrahydrophthalsäure, 3,6-Endomethylentetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenyl-indan-4,5'-dicarbonsäure. Von den aromatischen Dicarbonsäuren werden besonders bevorzugt die Terephthalsäure und/oder Isophthalsäure eingesetzt.

Bevorzugt werden als (Co)Polyestercarbonate B) diejenigen, wo Dicarbonsäuren in einer Menge von 5 bis 98 Mol-%, bevorzugt von 20 bis 50 Mol-% und 60 bis 95 Mol-% und insbesondere von 25 bis 45 Mol-% und 75 bis 95 Mol-% bezogen auf die Summe der Dicarbonsäuren und der Kohlensäure enthalten sind. Sie können nach Verfahren hergestellt werden, wie sie für die Polyestercarbonat-Herstellung aus der Literatur bekannt sind, so z.B. nach Verfahren in homogener Lösung, nach dem Schmelzumesterungsverfahren und nach dem Zweiphasengrenzflächenverfahren. Bevorzugt werden Schmelzumesterungsverfahren uns insbesondere das Zweiphasengrenzflächenverfahren benutzt.

Umesterungsverfahren in der Schmelze (Acetatverfahren und Phenylesterverfahren) werden beispielsweise in den US-PS 3 494 885, 4 386 186, 4 661 580, 4 680 371 und 4 680 372, den EP-A 26 120, 26 121, 26 684, 28 030, 39 845, 91 602, 97 970, 79 075, 146 887, 156 103, 234 913, 234 919 und 240 301 sowie den DE-A 1 495 626, 2 232 877 beschrieben. Das Zweiphasengrenzflächenverfahren wird beispielsweise beschrieben in den EP-A 68 014, 88 322, 134 898, 151 750, 182 189, 219 708, 272 426, in DE-A 2 940 024, 3 007 934, 3 440 020 und in Polymer Reviews, Volume 10, "Condensation Polymers by Interfacial and Solution Methods", Paul W. Morgan, Interscience Publishers, New York 1965, Kap. VIII, S. 325, Polyester.

Beim Acetatverfahren werden im allgemeinen Bisphenoldiacetat bzw. Bisphenol und Acetanhydrid sowie aromatische Dicarbonsäure unter Abspaltung von Essigsäure zum Polyester kondensiert. Beim Phenylesterverfahren werden im allgemeinen Bisphenol, aromatische Dicarbonsäure oder Diphenylester der aromatischen Dicarbonsäure und gegebenenfalls Diphenylcarbonat unter Phenolabspaltung und gegebenenfalls $CO_2$-Abspaltung zum Polyester bzw. Polyestercarbonat umgesetzt.

Beim Zweiphasengrenzflächenverfahren dienen als Ausgangsstoffe zur Herstellung von Polyestercarbonaten B), im allgemeinen Alkalibisphenolat, aromatisches Dicarbonsäuredichlorid und gegebenenfalls Phosgen. Bei dieser Kondensationsreaktion werden das Poly(ester)carbonat-Copolymere unter Alkalichloridbildung hergestellt. Im allgemeinen ist das gebildete Salz in der wäßrigen Phase gelöst, während der gebildete Polyester bzw. das gebildete Polycarbonat in der organischen Phase gelöst vorliegt.

Die Isolierung der Polyestercarbonate geschieht in bekannter Weise, indem man die bei Phasengrenzflächenverfahren erhaltene organische Phase abgetrennt, neutral und elektrolytfrei wäscht und dann beispielsweise aus organischer Phase unter Zusatz eines Nichtlösemittels fällt und trocknet.

Als Komponente C) der erfindungsgemäßen Polymermischungen sind Homo- oder Copolymerisate aus einem radikalisch polymerisierbaren Sulfonamidmonomeren und gegebenenfalls weiteren sulfonamidfreien Vinylmonomeren geeignet. Sulfonamidmonomere sind hierbei Vinylmonomere mit Struktureinheiten der Formel (I).

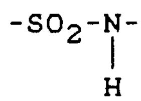 (I)

Bevorzugt sind Sulfonamidmonomere, die Vinylmonomere der Formel (II) und (III) darstellen.

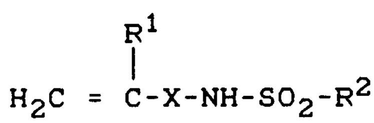 (II)

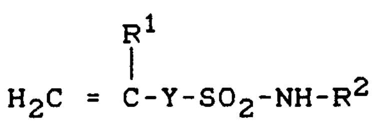 (III)

mit

$R^1$ = H, Methyl

X = Einfachbindung, $C_1$-$C_8$-Alkylen, zweiwertiger aromatischer Kohlenwasserstoffrest mit 6 - 25 Kohlenstoffatomen,

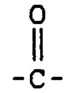, 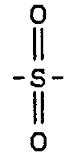

$R^2$ = $C_1$-$C_{12}$-Alkyl, einwertiger aromatischer Kohlenwasserstoffrest mit 6 - 25 Kohlenstoff atomen,

Y = Einfachbindung, $C_1$-$C_8$-Alkylen, zweiwertiger aromatischer Kohlenwasserstoffrest mit 6 - 25 Kohlenstoffatomen

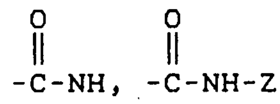

mit Z als zweiwertigen aromatischen Kohlenwasserstoffrest mit 6 - 25 Kohlenstoffatomen,

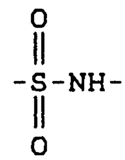

$R^3$ = Wasserstoff, $C_1$-$C_{12}$-Alkyl (geradkettig oder verzweigt), einwertiger aromatischer Kohlenwasserstoffrest mit 6 - 25 Kohlenstoffatomen,

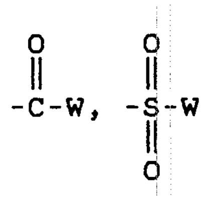

wobei

W = $C_1$-$C_{12}$-Alkyl oder ein einwertiger aromatischer Kohlenwasserstoffrest mit 6 - 25 Kohlenstoffatomen ist.

Besonders bevorzugt sind Vinylmonomere der Formel (II) und (III) mit

$R^1$ = H, $CH_3$

X = Einfachbindung, $C_1$-$C_4$-Alkylen, zweiwertiger aromatischer Kohlenwasserstoffrest mit 6 - 15 Kohlenstoffatomen, insbesondere bevorzugt 6 - 9 Kohlenstoffatomen,

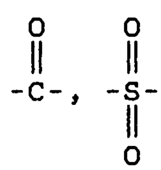

$R^2$ = $C_1$-$C_8$-Alkyl, insbesondere bevorzugt $C_1$-$C_4$-Alkyl, einwertiger aromatischer Kohlenwasserstoffrest mit 6 - 15 Kohlenstoffatomen, insbesondere bevorzugt 6 - 9 Kohlenstoffatomen

Y = Einfachbindung, $C_1$-$C_4$-Alkylen, zweiwertiger aromatischer Kohlenwasserstoffrest mit 6 - 15 Kohlenwasserstoffrest, insbesondere bevorzugt 6 - 9 Kohlenstoffatomen,

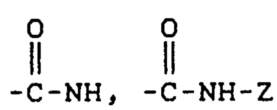

mit Z als zweiwertigen aromatischen Kohlenwasserstoff rest mit 6 - 15 Kohlenstoffatomen, insbesondere bevorzugt 6 - 9 Kohlenstoffatomen,

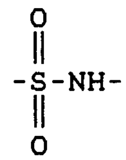

$R^3$ = Wasserstoff, $C_1$-$C_8$-Alkyl, insbesonder bevorzugt $C_1$-$C_4$-Alkyl, einwertiger Kohlenwasserstoffrest mir 6 - 15 Kohlenstoffatomen, insbesondere bevorzugt 6 - 9 Kohlenstoffatomen,

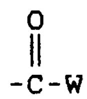 , 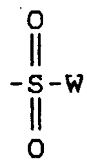

wobei

W = $C_1$-$C_8$-Alkyl, insbesondere bevorzugt $C_1$-$C_4$-Alkyl oder ein einwertiger aromatischer Kohlenwasserstoffrest mit 6 - 15 Kohlenstoffatomen, insbesondere bevorzugt 6 - 9 Kohlenstoffatomen ist.

Geeignete Sulfonamidmonomere gemäß Formeln (II) und (III) sind beispielsweise:

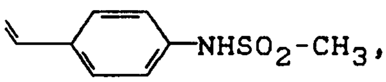, 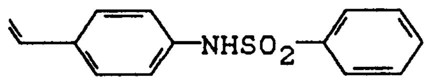 ,

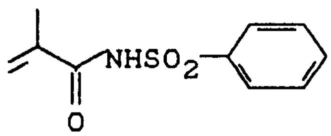 , 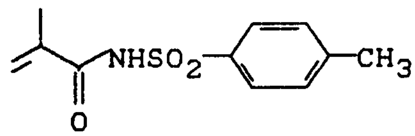

$CH_2 = CHSO_2NH_2$, $CH_2 = CHSO_2-NHC_2H_5$,
$CH_2 = CHSO_2-NH(i-C_3H_7)$, $CH_2 = CHSO_2NH(n-C_4H_9)$,

$CH_2 = CHSO_2-NH(n-C_6H_{13})$, 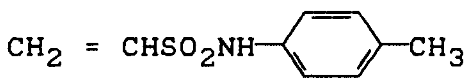,

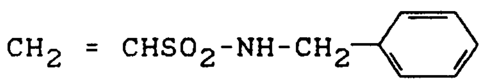 , 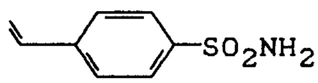,

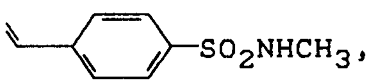, 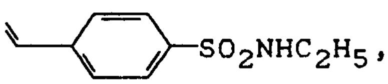, 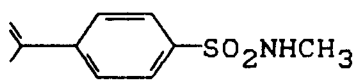,

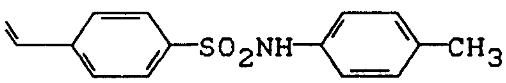 , 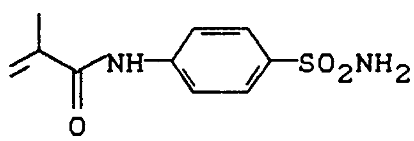,

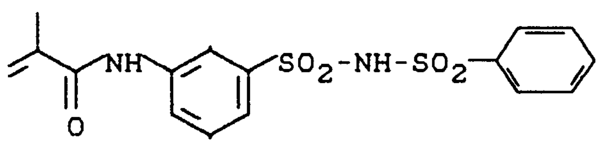

Unter sulfonamidfreien Vinylmonomeren sind beispielsweise zu verstehen:

a) Vinylverbindungen, wie Styrol, $\alpha$-Methylstyrol, Halogenstyrole, Methoxystyrole,
b) Vinylhalogenide, wie Vinylchlorid, Vinylfluorid, Vinylidenchlorid,
c) Vinylalkylketone, wie Vinylmethylketon,
d) Vinylester organischer Säuren, wie z.b. Vinylacetat, Vinylbutyrat, Vinylpropionat,
e) $\alpha$, $\beta$-ungesättigte Carbonsäuren, wie Acrylsäure, Methacrylsäure, Itaconsäure, Maleinsäure,
f) Derivate der Acrylsäure und der Methacrylsäure, wie Acrylnitril, Methacrylnitril, Acrylsäureamid, Methacrylsäureamid, N-Methylolacrylamid, N-Methylolmethacrylamid, Dimethylaminopropylamid,
g) $C_1$-$C_{14}$-Alkylacrylate, wie Methyl-, Ethyl-, n-, iso- oder tertiär-Butyl-, Octyl-, 2-Ethylhexylacrylat, Chlorethylacrylat, Benzylacrylat, Phenylethylacrylat;
h) polymerisierbare Olefine und Diene, wie Isobutylen, Butadien, Isopropen, Propylen, Chloropren oder beispielsweise auch
i) Vinylalkylether.

Die Homo- oder Copolymerisate C) enthalten bevorzugt Struktureinheiten der Formel (IV) und/oder (V) in Mengen von 1-100 Gew.-%, bevorzugt 5 - 100 Gew.-%.

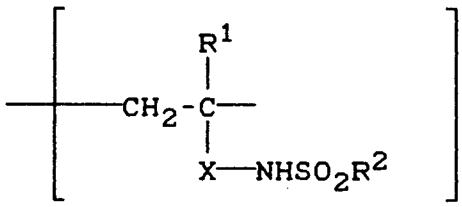

(IV)

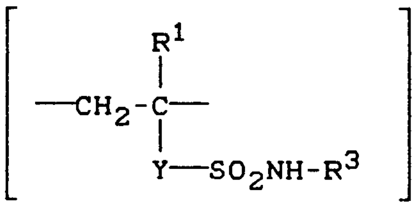

(V)

Worin $R^1$, X, $R^2$, Y, $R^3$ die unter den Formeln (II) und (III) genannte Bedeutung haben.

Die Homo- oder Copolymerisate C) können in an sich bekannter Weise durch Polymerisation aus einem radikalisch polymerisierbaren Sulfonamidmonomeren mit Struktureinheiten der Formel (I), vorzugsweise Sulfonamidmonomere gemäß Formel (II) und (III) und gegebenenfalls den obengenannten sulfonamidfreien Vinylmonomeren hergestellt werden.

Die Polymerisation wird bevorzugt als Lösungs-, Suspensions- oder Emulsionspolymerisation und bevorzugt in Gegenwart radikalischer Initiatoren durchgeführt. Geeignete radikalische Initiatoren sind beispielsweise azogruppenhaltige Verbindungen, wie Azoisobutyrodinitril, 4,4-Azobis-(4-cyanovaleriansäure), organische Peroxide, wie Benzoylperoxid, tert.-Butylhydroperoxid, Dibenzoylperoxid und anorganische Peroxidsalze, wie Kaliumperoxodisulfat, Ammoniumperoxodisulfat.

Wird die Polymerisation in Lösung vorgenommen, können Lösungsmittel verwendet werden, in denen nur die Monomeren löslich sind oder solche, in denen die Monomeren und die Polymerisate löslich sind. Geeignete organische Lösungsmittel sind beispielsweise Butanol, Methylethylketon, Ethylbenzol.

Wird die Polymerisation in (wäßriger) Emulsion durchgeführt, werden die Monomeren zweckmäßig mit Hilfe von Emulgatoren z.B. anionaktiven, kationaktiven oder nicht-ionogenen Emulgatoren emulgiert, beispielsweise mit Natrium-, Kalium, Ammonium-Salzen von Fettsäuren, Natriumlaurylsulfat, Natriumsalz von $C_{14}$-$C_{18}$-Alkylsulfonsäuren, Oleyl- oder Octadecykalkohol.

Polymerisiert wird vorteilhaft bei erhöhter Temperatur z.B. bei +30 bis +90 °C, insbesondere bei +60 bis +85 °C. Das Molekulargewicht der Homo- oder Copolymerisate C) kann in bekannter Weise durch Polymerisationstemperatur, Monomeren-Konzentration, Katalysatormenge und durch Molekulargewichtsregler eingestellt werden. Bevorzugte Molekulargewichtsregler sind Organoschwefelverbindungen, z.B. Mecaptane oder Disulfide, insbesondere langkettige Mercaptane, wie n- und tert.-Dodecylmercaptane. Sie werden normalerweise im Monomer gelöst. Die Molekulargewichte $\overline{M}_w$ (Gewichtsmittel) der erfindungsgemäßen Polymerisate (durch Lichtstreuung oder Sedimentation ermittelt) sind 1.000 bis 5.000.000 g/Mol.

Den erfindungsgemäßen Mischungen können ebenfalls noch übliche, literaturbekannte Schlagzähmodifikatoren, beispielsweise EP(D)M-, Acrylat- und Butadien-Kautschuke, gepfropft mit geeigneten Monomeren, wie vielfach in der Literatur beschrieben, etc. in Mengen von vorzugsweise 3-20 Gew.-% in der Mischung, und weitere übliche Additive hinzugegeben werden, z.B. Gleit- und Entformungsmittel, Nukleierungsmittel, Weichmacher, Stabilisatoren, Flammfest-Additive, Antidrippingmittel, Füll- und Verstärkungsstoffe einschließlich Verstärkungsfasern, Farbstoffe, Pigmente sowie Thermostabilisatoren, UV-Absorber, Antioxidantien und/oder Lichtschutzmittel

Diese Additive können in üblichen wirksamen Mengen entweder vor der Herstellung der erfindungsgemäßen Mischungen den Komponenten A), B) oder C) oder den binären Mischungen aus A) und B) oder A) und C) oder B) und C) zugesetzt werden oder nachträglich in die erfindungsgemäßen Mischungen eingearbeitet werden. Die Additive können auch in Form von Masterbatches eingearbeitet werden. Die Menge der Additive wird dabei so bemessen, daß die Additive die gewünschte Wirkung in der Mischung entfalten können. Sie ist leicht durch Vorversuche zu ermitteln.

Die erfindungsgemäßen Mischungen lassen sich zur Herstellung von Formkörpern in üblicher Weise verarbeiten.

Beispiele

Eingesetzte Substanzen (Komponenten)

A. Polyamid 6 mit einer relativen Viskosität von 4,0 (gemessen an einer 1 gew.-%igen Lösung in m-Kresol bei 25 °C).

B. Thermoplastisches, aromatisches Polycarbonat auf der Basis von 2,2-Bis-(4-hydroxyphenyl)-propan mit einer Viskosität von 1,28 (gemessen an einer 0,5 gew.-%igen Lösung in Methylenchlorid).

C. Sulfonamidpolymere:

C.1 Homopolymerisat, hergestellt durch Lösungspolymerisation des Monomers der Formel (IIa)

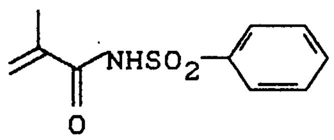

[η] DMF = 0,45 dl/g

[η] = Intrinsic-Viskosität, gemessen in Dimethyl formamid bei 25 °C.

C.2 Copolymerisat, hergestellt durch Lösungspolymerisation einer Monomermischung aus Methylmethacrylat und dem Monomer der Formel (IIa) im Gewichtsverhältnis 70:30 in Methylethylketon.

C.3 Copolymerisat, hergestellt durch Lösungspolymerisation einer Monomermischung aus Methylmethacrylat und dem Monomer der Formel (IIa) im Gewichtsverhältnis 85:15 in Methylethylketon.

[η] DMF = 0,42 dl/g

D. Kautschuke:

D.1 EPM-Kautschuk hergestellt aus 45 Gew.-% Ethen, 54,3 Gew.-% Propen und 0,7 Gew.-% Maleinsäureanhydrid mit einer Dichte von 0,87 g/cm (derzeitiges Handelsprodukt der Firma EXXON, "Exxelor® VA 1803").

D.2 Pfropfpolymerisat, hergestellt durch Pfropfung von 40 Gew.-% einer Monomermischung aus 72 Gew.-% Styrol und 28 Gew.-% Acrylnitril auf 60 Gew.-% eines vernetzten, teilchenförmigen n-Butylacrylatkautschuks mit einer Teilchengröße ($d_{50}$-Wert) von 480 nm und einem Gelgehalt von 90 Gew.-% (gemessen in DMF). (Das Pfropfpolymerisat besitzt Core-Shell-Struktur, gemäß seiner Herstellungsweise).

Herstellung und Prüfung der Formmassen

I) Auf einem kontinuierlich arbeitenden Doppelwellenextruder wurde das Polyamid A) zusammen mit dem Kautschuk-Schlagzäh-Modifikator D) aufgeschmolzen und in der Schmelze homogenisiert. Die Zylindertemperaturen wurden so gewählt, daß Massetemperaturen von 260 bis 300 °C eingehalten wurden. Der Schmelzestrang wurde in Wasser abgeleitet, granuliert und getrocknet.

II) Das Masterbatch aus I) wurde mit dem Polycarbonat B), einem Sulfonamidpolymer C) sowie gegebenenfalls einem weiteren Modifikator D) oder Zusätzen aufgeschmolzen und in der Schmelze homogenisiert. Die Zylindertemperaturen wurden so gewählt, daß Massetemperaturen von 270 bis 340 °C eingehalten wurden. Der Schmelzestrang wurde in Wasser abgeleitet, granuliert und getrocknet.

Von den Formmassen wurden auf einer üblichen Spritzgußmaschine 80 mm x 10 mm x 4 mm Prüfstäbe und Farbmusterplättchen 60 mm x 40 mm x 4 mm hergestellt. Geprüft wurden der Biege-E-Modul (DIN 53 457), die Wärmeformbeständigkeit (HDT-A an flach aufgelegten Prüfkörpern bei einer Randfaserdehnung von 0,2 % nach ISO 25) sowie die Schlagzähigkeit bzw. Kerbschlagzähigkeit nach Izod (ISO 180). An den Musterplättchen wurden die Oberflächenqualitäten beurteilt.

Tabelle 1

| Zusammensetzung der Formmassen (Angaben in Gew.-%) | | | | | | | |
|---|---|---|---|---|---|---|---|
| Beispiel | A | B | $C^1$ | $C^2$ | $C^3$ | $D^1$ | $D^2$ |
| 1* | 36,2 | 53,8 | - | - | - | 7 | - |
| 2 | 34,2 | 51,3 | 5 | - | - | 9,5 | - |
| 3 | 33,0 | 39,8 | - | 8 | - | 9,2 | 10 |
| 4 | 33,0 | 49,8 | - | 8 | - | 9,2 | - |
| 5 | 33,0 | 39,8 | - | - | 8 | 9,2 | 10 |
| 6 | 33,0 | 49,8 | - | - | 9 | 9,2 | - |

* Vergleichsversuche

Tabelle 2

| Prüfergebnisse der Formmassen | | | | | |
|---|---|---|---|---|---|
| Beispiel | Biege-E-Modul [N/mm²] | $a_n^+$ [kJ/m²] | $a_k^+$ [kJ/m²] | HDT-A [°C] | Oberfläche |
| 1* | 2261 | 26 | 2,9 | 120 | delaminiert |
| 2 | 2384 | n.g. | 18,5 | 125 | matt |
| 3 | 2191 | n.g. | 16,0 | 121 | glänzend |
| 4 | 2490 | n.g. | 14,0 | 127 | glänzend |
| 5 | 2116 | n.g. | 34,0 | 122 | glänzend |
| 6 | 2341 | n.g. | 21,0 | 127 | glänzend |

* Vergleichsversuche
$^+a_n$ = Schlagzähigkeit
$a_k$ = Kerbschlagzähigkeit

Wie anhand der Beispiele ersichtlich ist, zeichnen sich die erfindungsgemäßen Mischungen durch eine hohe Wärmeformbeständigkeit, gute Zähigkeiten und gleichmäßige, glänzende Oberflächen aus.

**Patentansprüche**

**1.** Polymermischungen enthaltend

A) 5 bis 70 Gew.-%, vorzugsweise 10 bis 60 Gew.-%, insbesondere 15 bis 50 Gew.-% eines thermoplastischen Polyamids,

B) 94 bis 10 Gew.-%, vorzugsweise 87 bis 25 Gew.-%, insbesondere 80 bis 40 Gew.-% eines thermoplastischen, aromatischen Polycarbonats oder Poly-(ester-)carbonats,

C) 1 bis 20 Gew.-%, vorzugsweise 3 bis 15 Gew.-%, insbesondere 5 bis 10 Gew.-% eines Homo- oder Copolymerisats aus einem radikalisch polymerisierbaren Sulfonamidmonomeren und gegebenenfalls einem weiteren sulfonamidfreien Vinylmonomeren

sowie gegebenenfalls zusätzlich

D) Elastomere als Schlagzähmodifikatoren und/oder übliche Zusatzstoffe.

**2.** Polymermischungen gemäß Anspruch 1, dadurch gekennzeichnet, daß die Sulfonamidmonomere Vinylmonomere mit Struktureinheiten der Formel (I)

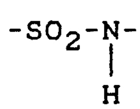

sind.

3. Polymermischungen gemäß Ansprüchen 1 und 2, dadurch gekennzeichnet, daß die Sulfonamidmonomere in C) Vinylmonomere der Formel (II) und (III) sind

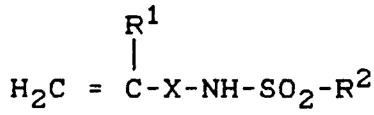 (II)

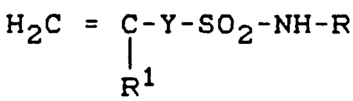 (III)

mit

$R^1$ = H, Methyl

X = Einfachbindung, $C_1$-$C_8$-Alkylen, zweiwertiger aromatischer Kohlenwasserstoffrest mit 6 - 25 Kohlenstoffatomen,

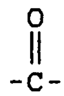, 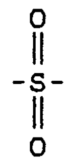

$R^2$ = $C_1$-$C_{12}$-Alkyl, einwertiger aromatischer Kohlenwasserstoffrest mit 6 - 25 Kohlen stoffatomen

Y = Einfachbindung, $C_1$-$C_8$-Alkylen, zwei wertiger aromatischer Kohlenwasser stoffrest mit 6 - 25 Kohlenstoffatomen

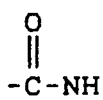, 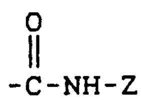

mit Z als zweiwertigen aromatischen Kohlenwasserstoffrest mit 6 - 25 Kohlenstoffatomen,

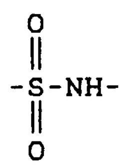

$R^3$ = Wasserstoff, $C_1$-$C_{12}$-Alkyl, einwertiger aromatischer Kohlenwasserstoffrest mit 6 - 25 Kohlenstoffatomen,

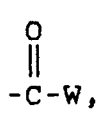, 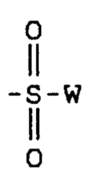

wobei W = $C_1$-$C_{12}$-Alkyl oder ein einwertiger aromatischer Kohlenwasserstoffrest mit 6-25 Kohlenstoffatomen ist.

**4.** Mischungen gemäß Anspruch 1 enthaltend als Komponente D) Schlagzähmodifikatoren sowie übliche Zusatzstoffe der wirksamen Mengen, wie Gleit- und Entformungsmittel, Nukleierungsmittel, Weichmacher, Stabilisatoren, Flammfest-Additive, Antidripping-Mittel, Füll- und Verstärkungsstoffe, Pigmente, Farbstoffe sowie Thermostabilisatoren, Antioxidantien, UV-Absorber und/oder Lichtschutzmittel.

**5.** Verwendung der Polymermischungen nach Ansprüchen 1 bis 4 zur Herstellung von Formkörpern, Extrudaten und Folien.

**6.** Verfahren zur Herstellung von Polymermischungen nach Ansprüchen 1 bis 4, dadurch gekennzeichnet, daß

A) 5 bis 70 Gew.-%, vorzugsweise 10 bis 60 Gew.-%, insbesondere 15 bis 50 Gew.-% eines thermoplastischen Polyamids,

B) 94 bis 10 Gew.-%, vorzugsweise 87 bis 25 Gew-%, insbesondere 80 bis 40 Gew.-% eines thermoplastischen, aromatischen Polycarbonats oder Poly-(ester-)carbonats,

C) 1 bis 20 Gew.-%, vorzugsweise 3 bis 15 Gew.-%, insbesondere 5 bis 10 Gew.-% eines Homo- oder Copolymerisats an einen radikalisch polymerisierbaren Sulfonamidvinylmonomeren mit Struktureinheiten $-SO_2-NH-$ und gegebenenfalls einem weiteren, sulfonamidfreien Vinylmonomeren, sowie

D) gegebenenfalls zusätzlich Elastomer-Schlagzähmodifikatoren und/oder üblichen Zusatzstoffen

ein- oder mehrstufig in der Schmelze bei Temperaturen von 270 bis 310 °C vermischt werden.

**7.** Verfahren nach Anspruch 6 zur Herstellung von Mischungen nach Ansprüchen 1 bis 4, dadurch gekennzeichnet, daß als Polyamide A) solche mit einem Amidgruppengehalt von unter 30 Milliäquivalenten/kg eingesetzt werden.